# EUROPEAN PATENT SPECIFICATION

(11) **EP 2 015 867 B1**
(45) Date of publication and mention of the grant of the patent: **03.10.2012**
(21) Application number: 07794473.4
(22) Date of filing: 02.05.2007
(51) Int. Cl.: B01J 19/26, B01J 4/00

(54) **MATERIAL PROCESSING SYSTEM THROUGH AN INJECTION NOZZLE**
MATERIALVERARBEITUNGSSYSTEM MITTELS EINSPRITZDÜSE
SYSTÈME DE TRAITEMENT DE MATIÈRE FAISANT INTERVENIR UN AJUTAGE D'INJECTION

(30) Priority: 10.05.2006 US 431239
(43) Date of publication of application: 21.01.2009
(73) Proprietor: Grupo Petrotemex, S.A. de C.V., 66265 San Pedro Garza Garcia, Nuevo Leon (MX)
(72) Inventor: VENETT, Kenrick, Lyle, Kingsport, TN 37660 (US); COPPARI, Lawrence, Americus, Kingsport, TN 37660 (US)
(74) Representative: Tostmann, Holger Carl
(86) International application number: PCT/US2007/010591
(87) International publication number: WO 2007/133452

(56) References cited:
- EP-A- 0 617 112
- WO-A-00/27523
- JP-A- 57 010 766
- JP-A- 58 034 811

## Description

### Introduction

The present disclosure relates to material-processing systems configured to direct material discharged by a material processor through a passage. More particularly, the present disclosure relates to such material-processing systems further configured to introduce fluid additive into the passage through a nozzle having an outlet in fluid communication with the passage. According to the invention, the material processing system is a polymer-processing system as defined in the claims.

Also described is a method of processing material. The method may include discharging a first material from a material processor.
Additionally, the method may include directing at least a portion of the first material discharged from the material processor through a passage. Additionally, the method may include introducing fluid additive into the passage by directing fluid additive through a nozzle having an outlet in fluid communication with the passage, the nozzle being insulated in a manner that slows heat transfer to the nozzle from the first material or the fluid additive.

A disclosed embodiment relates to a polymer-processing system. The polymer-processing system includes a polymerization processor configured to discharge liquid polymer. Additionally, the polymer-processing system includes a passage, and the polymer-processing system is configured to direct at least a portion of the liquid polymer through the passage. The polymer-processing system also includes a nozzle having an outlet in fluid communication with the passage. Additionally, the polymer-processing system includes a fluid-supply system configured to direct fluid additive through the nozzle. The nozzle is insulated in a manner that slows heat transfer to the nozzle from the liquid polymer or the fluid additive.

### Brief Description of the Drawings

Fig. 1 is a schematic illustration of one embodiment of a polymer-processing system according to the present invention; and

Fig. 2 is a close-up view of the portion of Fig. 1 shown in circle 2.

### Detailed Description

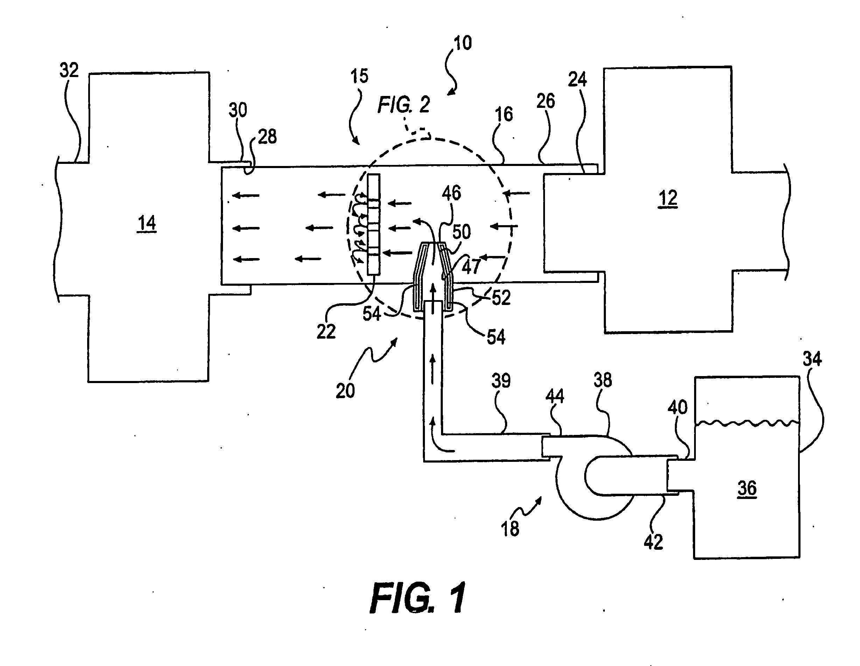

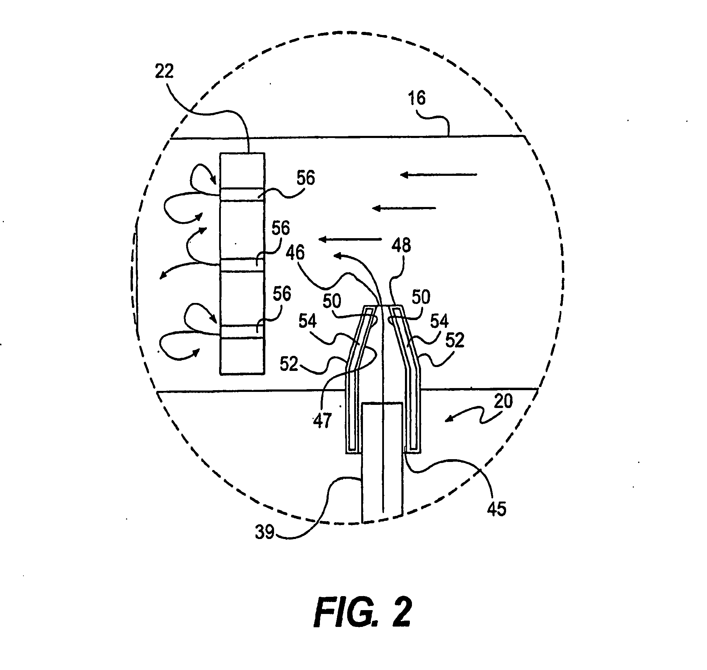

Figs. 1 and 2 illustrate one embodiment of a material-processing system 10 according to the present invention, wherein the material-processing system is a polymer-processing system and material processor 12 is a polymerization processor. Material-processing system 10 may include a material processor 12, a material processor 14, a material-transfer system 15, a fluid-supply system 18, a nozzle 20, and an agitator 22. Material-processing system 10 is configured to process material in material processor 12, transfer material processed by material processor 12 through material-transfer, system 15 to material processor 14, and introduce a fluid additive to the material from material processor 12 as it flows through material-transfer system 15.

In some embodiments, material-processing system 10 may be configured to process ethylene glycol, terephthalic acid, and various additives and catalysts to produce polymer. In such embodiments, material-processing system 10 may be configured to mix ethylene glycol and terephthalic acid and direct the mixture through one or more esterification reactors that handle the mixture in such a way to promote formation of oligomers. Furthermore, material-processing system 10 maybe configured to direct oligomer and/or polymer through one or more polycondensation reactors in order to promote production of polymer from oligomer and/or growth of polymer chains.

Material processor 12 may be any type of device configured to receive one or more materials in solid, liquid, and/or gaseous form, execute one or more operations involving those materials (such as a pump), and transfer at least some of the material into material -transfer system 15 for delivery to material processor 14. Material processor 12 has an outlet 24 connected to passage 16. The material processor 12 is a polymerization processor. For example, material processor 12 may be a polycondensation reactor. In such embodiments, material processor 12 may be configured to receive liquid monomer, liquid oligomer, and/or liquid polymer and handle the liquid monomer, liquid oligomer, and/or liquid polymer in such a manner to promote polymer chain growth and evaporation of ethylene glycol byproduct. In embodiments where material processor 12 is a polycondensation reactor, material processor 12 may keep the liquid monomer, liquid oligomer, and/or liquid polymer at a high temperature, such as 270 degrees Celsius, and low pressure, such as under vacuum, as it flows through material processor 12.

Material-transfer system 15 may be any system configured to transfer material discharged from material processor 12 to material processor 14. Material-transfer system 15 includes a passage 16. Passage 16 may include any component or group of components capable of transferring material from material processor 12 to material processor 14. For example, as is shown in Fig. 1, passage 16 may be a conduit that extends between material processor 12 and material processor 14.

Material processor 14 may be any type of device configured to receive a material (solid, liquid, and/or gaseous material) from passage 16 and material processor 14 may be capable of executing one or more operations involving that material. In some embodiments, material processor 14 may be a simple container. Additionally, material processor 14 may be a polycondensation reactor. In some embodiments, an outlet 32 of material processor 14 may be connected to additional devices (not shown) configured to receive material from material processor 14 and perform various operations involving that material.

Fluid-supply system 18 includes any type of device or devices configured to supply fluid additive (e.g. liquids and/or gases) into passage 16 through nozzle 20. In some embodiments, fluid-supply system 18 may also be configured to supply into passage 16 through nozzle 20 a combination of fluid additive and solid additive suspended, dissolved, or melted in the fluid additive. In some embodiments, fluid-supply system 18 may include a reservoir 34 with fluid additive 36 therein, a pump 38, and a conduit 39. Reservoir 34 may include an outlet 40 connected to an inlet 42 of pump 38. Conduit 39 may be connected between an outlet 44 of pump 38 and nozzle 20.

Nozzle 20 may have an inlet 45 connected to conduit 39 and has an outlet 46 in fluid communication with passage 16. Nozzle 20 may be any type of device configured to direct fluid additive from fluid-supply system 18 into passage 16 through outlet 46. In some embodiments, nozzle 20 may include an inward taper 47 between inlet 45 and outlet 46. Inward taper 47 may extend all the way through nozzle 20, or, as Figs. 1 and 2 show, inward taper 47 may extend only partially through nozzle 20. Additionally, as Figs. 1 and 2 show, the narrow end of inward taper 47 may be at outlet 46, or the narrow end of inward taper 47 may be disposed at a distance from outlet 46. Additionally, outlet 46 of nozzle 20 may be relatively small. Nozzle 20 may be flush with the side of passage 16, or nozzle 20 may extend into passage 16. In embodiments where nozzle 20 extends into passage 16, the amount of extension into passage 16 may vary. In some embodiments, nozzle 20 may extend more than halfway across passage 16.

Additionally, as is shown in Fig. 2, the nozzle 20 is insulated. Nozzle 20 may be insulated in a variety of ways. In some embodiments, nozzle 20 may have a double-wall construction with a space 48 defined between an inner wall 50 and an outer wall 52. In some embodiments, nozzle 20 may be constructed such that space 48 is sealed. As is shown in Fig. 2, nozzle 20 may include insulating material 54 in space 48. Alternatively, space 48 may be vacant (as in a vacuum) or partially or fully filled with a gaseous insulating material, such as air or other suitable gases, such as an inert gas like helium, argon, etc. Additionally, space 48 may be filled with any combination of the disclosed alternative insulating possibilities. Additionally, in some embodiments, nozzle 20 may have a single-wall construction, omitting outer wall 52. In such embodiments, nozzle 20 may be insulated with insulating material disposed inside and/or outside of inner wall 50. Regardless of whether nozzle 20 has a single-wall construction or a double-wall construction, various types of insulating material may be employed to insulate nozzle 20, including, but not limited to, mineral wool, fiberglass insulation, melamine foam, phenolic foam, styrofoam, cellular glass, ceramics, calcium silicate, and polyethelene.

Agitator 22 may be disposed downstream of nozzle 20 in passageway 16. Agitator 22 may be any type of device configured to create turbulence in material flowing through passage 16. For example, in some embodiments, agitator 22 maybe a static mixer. As is shown in Fig. 2, agitator 22 may include a plate extending at least partially across passage 16 and having one or more apertures 56 therein.

Additionally, in some embodiments, agitator 22 may include one or more objects (not shown) having no apertures but extending only partially across passage 16, such that openings exist between the perimeter of agitator 22 and the inner surface of passage 16. For example, in some embodiments passage 16 may have a circular cross-section and agitator 22 may include a square plate (not shown) extending transversely across passage 16, such that openings are formed between the straight sides of the square plate and the inner surface of passage 16.

Material-processing system 10 is not limited to the configurations shown in Figs. 1 and 2 and discussed above. For example, in addition to material processors 12, 14 and nozzle 20, material-processing system 10 may include other devices connected to material-transfer system 15. Additionally, material-transfer system 15 may include various components not shown in Figs. 1 and 2, such as valves, additional pumps, additional conduits, and various other material-transfer components. Furthermore, material-processing system 10 may omit agitator 22 or include additional agitators within passage 16. Moreover, fluid-supply system 18 may be configured to utilize means other than pump 38 to motivate fluid additive 36 to and through nozzle 20. Additionally, material -transfer system 15 may include additional passages.

According to the invention the material-processing system 10 is a polymer-processing system, and either of material processors 12, 14 may be any type of device operable to advance the process of producing polymer from ethylene glycol and terephthalic acid. For example, in some embodiments, either of material processors 12, 14 may be an esterification processor configured to foster a chemical reaction producing oligomer. In embodiments where a material processor 12, 14 is an esterification processor, that material processor 12, 14 may keep the material it processes at a relatively high temperature, such as 250 degrees Celsius, and a positive gauge pressure, while the material is in the material processor 12, 14.

During operation of material-processing system 10, material processor 12 discharges a first material, such as liquid polymer, through outlet 24 into inlet 26 of passage 16. In some embodiments, material processor 12 may discharge liquid polymer that includes poly(ethylene terephthalate) (PET). Additionally, in some embodiments, material processor 12 may discharge liquid polymer including a polyester, a polyamide, a polyurethane, a polyolefin or a copolymer thereof. From inlet 26, the first material may flow past nozzle 20, across agitator 22, to material processor 14.

Fluid-supply system 18 and nozzle 20 operate to deliver fluid additive 36, and any solid additive suspended, dissolved, or melted therein, into passage 16. Pump 38 may draw fluid additive 36 from reservoir 34 and pump it through conduit 39 and nozzle 20 into passage 16. Fluid-supply system 18 may deliver any type of liquid or gas into passage 16. In some embodiments fluid-supply system 18 may deliver phosphoric acid into passage 16. In such embodiments, phosphoric acid delivered into passage 16 may neutralize a catalyst in liquid polymer flowing through passage 16. In some embodiments, such as where material processor 12 discharges PET, so neutralizing the catalyst therein may reduce byproducts such as acid aldehyde (AA). Reducing byproducts such as AA may be beneficial in applications such as where PET is used to produce drinking vessels. In other embodiments, fluid-supply system 18 may deliver fluid additives such a catalyst or a colorant in an ethylene glycol carrier stream or another type of carrier stream.

Fluid-supply system 18 may also deliver types of liquid or gas other than phosphoric acid into passage 16. By way of example, other materials which may be utilized as additives within the chemical, pharmaceutical, food, water, and polymer processing industries include a colorant, a pigment, a carbon black, a glass fiber, an impact modifier, an antioxidant, a surface lubricant, a denesting agent, a UV light absorbing agent, a metal deactivator, filler, a nucleating agent, a stabilizer, a flame retardant, a reheat aid, a crystallization aid, an acetaldehyde reducing compound, a recycling release aid, an oxygen scavenging material, a platelet particle, amino acids, glycerin lower fatty acid esters, sugar esters, salts of vitamin B1, polyphosphates, ethanol, basic proteins and peptides, antibacterial extract from licorice, extract from red pepper, extract from hop, extract from yucca, extract from moso bamboo (thick-stemmed bamboo), extract from grape fruit seed, extract from wasabi (Japanese horseradish) or mustard, acetic acid, lactic acid, fumaric acid and the salts thereof, sorbic acid, benzoic acid and the salts and esters thereof, propionic acid and the salt thereof, chitosan and bacterium DNA, cyclohexane dimethanol, trimellitic anhydryde and other cross-linking agents, and a mixture thereof.

In some embodiments, fluid-supply system 18 may deliver fluid additive 36 into passage 16 at a different temperature than the material directed from material processor 12 through passage 16. According to the invention the material processor 12 discharges liquid polymer, and the liquid polymer flowing through passage 16 may have a relatively high temperature, such as 270 degrees Celsius, and fluid additive 36 may be directed through nozzle 20 at a temperature below the melting point of the liquid polymer, such as approximately ambient temperature.

Additionally, in some embodiments, fluid additive 36 may be delivered at a temperature higher than the material discharged by material processor 12.

According to the invention the material processor 12 discharges liquid polymer, and the melting point of the liquid polymer may be different depending on where in material-processing system 10 material processor 12 is and what type of device material processor 12 is. For example, where material processor 12 is a polycondensation reactor, liquid polymer discharged thereby may have a higher melting point than where material processor is an esterification reactor.

In embodiments where the material discharged from material processor 12 and transferred through passage 16 has a different temperature than fluid additive 36 flowing through nozzle 20, heat may transfer from the warmer material to the cooler material through nozzle 20. For example, in embodiments where liquid polymer is directed through passage 16 and fluid additive 36 flowing through nozzle 20 has a temperature near ambient, heat may transfer from the liquid polymer to nozzle 20, through nozzle 20, to fluid additive 36 flowing through nozzle 20. As a result, the outer surfaces of nozzle 20 and the polymer adjacent those other surfaces may have a significantly lower temperature than polymer in other portions of passage 16. For example, under some operating conditions, if nozzle 20 were uninsulated, directing liquid polymer past nozzle 20 at a temperature of 270 degrees Celsius, while directing fluid additive 36 through nozzle 20 at approximately ambient temperature, could result in the exterior surface of nozzle 20 having a temperature of approximately 160 degrees Celsius. Such a low temperature of the exterior surface of nozzle 20 could cause liquid polymer flowing through passage 16 to solidify on nozzle 20.

Insulating nozzle 20 provides various benefits, as insulating nozzle 20 slows heat transfer through nozzle 20, which slows heat transfer to nozzle 20 from the warmer of the materials flowing through passage 16 and nozzle 20. This helps prevent the warmer material from cooling to its melting point and solidifying on or inside nozzle 20. Preventing solidification of material on nozzle 20 may promote unrestricted flow of material through passage 16 and nozzle 20. Additionally, preventing an accumulation of solid material on nozzle 20 may prevent the possibility of such an accumulation breaking free from nozzle 20, flowing to agitator 22, and restricting flow of material through agitator 22.

The disclosed embodiments of nozzle 20 may also help promote reliable flow of fluid through nozzle 20 in some embodiments where fluid-supply system 18 delivers fluid-additive 36 through nozzle 20 at a temperature lower than the material flowing through passage 16. In embodiments where fluid-supply system 18 delivers fluid additive 36 in liquid form and the material flowing through passage 16 has a temperature higher than the vaporization temperature of liquid additive 36, in some circumstances, heat transferred through nozzle 20 to fluid additive 36 could cause liquid additive 36 to vaporize, hi some embodiments, if fluid additive 36 vaporizes within nozzle 20, fluid-supply system 18 may experience problems in supplying liquid additive 36 into passage 16. Insulating nozzle 20 and thereby suppressing heat transfer through nozzle 20 may help reduce the possibility of fluid additive 36 vaporizing within nozzle 20.

Additionally, constructing nozzle 20 with a relatively small outlet 46 and inward taper 47 between inlet 45 and outlet 46 may help promote reliable flow of fluid additive 36 through nozzle 20 into passage 16. Inward taper 47 may tend to cause increase the back pressure in nozzle 20 when fluid-supply system 18 is transmitting fluid additive 36 through nozzle 20. Increasing the back pressure in nozzle 20 when fluid additive 36 is flowing therethrough may increase the vaporization temperature of fluid additive 36 flowing through nozzle 20 and, thereby, reduce the possibility of fluid additive 36 vaporizing in nozzle 20. Additionally, making outlet 46 relatively small may cause fluid additive 36 to exit outlet 46 of nozzle 20 at a relatively high velocity for a given volumetric flow rate of fluid additive 36 through nozzle 20. Causing fluid additive 36 to exit outlet 46 with a relatively high velocity may reduce the possibility of pressure in passage 16 causing the flow of fluid in nozzle 20 to reverse and the material flowing through passage 16 to flow into outlet 46 of nozzle 20. In some embodiments, outlet 46 of nozzle 20 may be sized so as to cause fluid additive 36 to flow through outlet 46 at a high enough velocity to substantially prevent pressure in the passage from causing reversal of flow in nozzle 20.

## Claims

1. A polymer-processing system, comprising:
a polymerization processor configured to discharge liquid polymer;
a passage, wherein the polymer-processing system is configured to direct at least a portion of the liquid polymer through the passage;
a nozzle having an outlet in fluid communication with the passage;
a fluid-supply system configured to direct fluid additive through the nozzle; and
wherein the nozzle is insulated in a manner that slows heat transfer to the nozzle from the liquid polymer or the fluid additive and wherein the nozzle extends at least partially into the passage.

2. The polymer-processing system of claim 1, wherein the fluid-supply system is configured to direct fluid additive through the nozzle at a temperature lower than a temperature at which the liquid polymer is directed through the passage.

3. The polymer-processing system of claim 1, further including an agitator disposed in the passage downstream of the nozzle, and wherein the agitator includes a plate having one or more apertures extending therethrough.

4. The polymer-processing system of claim 1, wherein the nozzle has a double-wall construction with a space defined between an inner wall of the nozzle and an outer wall of the nozzle, and wherein the nozzle includes insulating material disposed within the space between the inner wall of the nozzle and the outer wall of the nozzle.

5. The polymer-processing system of claim 1, wherein the nozzle includes an inward taper between its inlet and its outlet.

## Patentansprüche

1. Polymer-verarbeitendes System, umfassend:
eine Polymerisationsanlage, die so ausgestaltet ist, dass aus ihr flüssiges Polymer abgelassen werden kann;
eine Passage, wobei das Polymer-verarbeitende System so ausgestaltet ist, dass mindestens ein Teil des flüssigen Polymers durch die Passage geleitet werden kann;
eine Düse mit einem Auslass in flüssiger Kommunikation mit der Passage;
ein Versorgungssystem für ein Fluid, welches so ausgestaltet ist, dass ein fluides Additiv durch die Düse geleitet werden kann; und
wobei die Düse in einer Weise isoliert ist, welche den Wärmeübergang zu der Düse vom flüssigen Polymer oder dem fluiden Additiv verlangsamt, und wobei sich die Düse zumindest teilweise in die Passage hinein erstreckt.

2. Polymer-verarbeitendes System nach Anspruch 1, wobei das Versorgungssystem für das Fluid so ausgestaltet ist, dass es fluides Additiv durch die Düse leitet bei einer Temperatur, welche niedriger ist als eine Temperatur, bei welcher das flüssige Polymer durch die Passage geleitet wird.

3. Polymer-verarbeitendes System nach Anspruch 1, weiter enthaltend eine Rühreinrichtung, welche in der Passage stromabwärts zur Düse angebracht ist, und wobei die Rühreinrichtung eine Platte enthält, welche eine oder mehrere Öffnungen aufweist, die sich durch diese hindurch erstrecken.

4. Polymer-verarbeitendes System nach Anspruch 1, wobei die Düse eine doppelwandige Konstruktion mit einem Raum aufweist, der zwischen der Innenwandung der Düse und einer Außenwandung der Düse definiert ist, und wobei die Düse ein isolierendes Material aufweist, welches innerhalb des Raumes zwischen der Innenwand der Düse und der Außenwand der Düse angebracht ist.

5. Polymer-verarbeitendes System nach Anspruch 1, wobei die Düse einen einwärts gerichteten Kegel zwischen ihrem Einlass und ihrem Auslass aufweist.

## Revendications

1. Système de traitement de polymère comprenant :
un dispositif de traitement de polymérisation configuré pour évacuer un polymère liquide ;
un passage, où le système de traitement de polymère est configuré pour diriger au moins une partie du polymère liquide dans le passage ;
une buse ayant une sortie en communication par fluide avec le passage ;
un système d'apport de fluide configuré pour diriger un additif fluide dans la buse ;
et
où la buse est isolée d'une manière qui ralentit le transfert thermique vers la buse depuis le polymère liquide ou l'additif fluide et où la buse s'étend au moins partiellement dans le passage.

2. Système de traitement de polymère selon la revendication 1, où le système d'apport de fluide est configuré pour diriger un additif fluide dans la buse à une température inférieure à une température à laquelle le polymère liquide est dirigé dans le premier passage.

3. Système de traitement de polymère selon la revendication 1, incluant en outre un agitateur disposé dans le passage en aval de la buse et où l'agitateur inclut une plaque ayant une ou plusieurs ouvertures la traversant.

4. Système de traitement de polymère selon la revendication 1, où la buse a une construction à double paroi avec un espace défini entre une paroi interne de la buse et une paroi externe de la buse, et où la buse inclut un matériau isolant disposé dans l'espace entre la paroi interne de la buse et la paroi externe de la buse.

5. Système de traitement de polymère selon la revendication 1, où la buse inclut un amincissement vers l'intérieur entre son entrée et sa sortie.
